# EUROPÄISCHE PATENTSCHRIFT

(11) **EP 3 661 796 B1**
(45) Veröffentlichungstag und Bekanntmachung des Hinweises auf die Patenterteilung: **23.06.2021**
(21) Anmeldenummer: 18749332.5
(22) Anmeldetag: 27.07.2018
(51) Int. Cl.: B60K 35/00, B60K 37/02, G06F 3/01, B60R 1/00

(54) **VERFAHREN ZUM BETREIBEN EINES BILDSCHIRMS EINES KRAFTFAHRZEUGS SOWIE KRAFTFAHRZEUG**
METHOD FOR OPERATING A MONITOR OF A MOTOR VEHICLE, AND MOTOR VEHICLE
PROCÉDÉ DE FONCTIONNEMENT D'UN ÉCRAN D'UN VÉHICULE AUTOMOBILE ET VÉHICULE AUTOMOBILE

(30) Priorität: 31.07.2017 DE 102017213177
(43) Veröffentlichungstag der Anmeldung: 10.06.2020
(73) Patentinhaber: Audi AG, 85045 Ingolstadt (DE)
(72) Erfinder: LERZER, Jürgen, 92318 Neumarkt (DE); PRÜCKLMEIER, Andreas, 93309 Kelheim (DE)
(86) Internationale Anmeldenummer: PCT/EP2018/070434
(87) Internationale Veröffentlichungsnummer: WO 2019/025310

(56) Entgegenhaltungen:
- DE-A1-102012 019 508
- DE-A1-102016 116 839
- TW-B- I 581 991

## Beschreibung

Die Erfindung betrifft ein Verfahren zum Betreiben eines Bildschirms eines Kraftfahrzeugs. Ein zweiter Aspekt der Erfindung betrifft ein Kraftfahrzeug, welches insbesondere dazu eingerichtet ist, das genannte Verfahren durchzuführen.

Bildschirme in einem Kraftfahrzeug sind aus dem Stand der Technik bekannt. Beispielsweise kann der Bildschirm Teil eines Entertainmentsystems, eines Navigationssystems oder eines Informationssystems des Kraftfahrzeugs sein. Der Inhalt des Bildschirms kann dabei abhängig von einer Blickrichtung eines Nutzers, insbesondere eines Fahrers, des Kraftfahrzeugs dargestellt werden.

Beispielsweise offenbart die DE 10 2011 056 714 A1 ein System und ein Verfahren zum Aktivieren einer visuellen Steuerungsschnittstelle und insbesondere zum Aktivieren einer visuellen Steuerungsschnittstelle unter Benutzung eines Augenverfolgungssystems in einem Fahrzeug. Das System erlaubt es einem Fahrer eines Fahrzeugs, dem System durch Auswählen des Schalters zu signalisieren, den Steuerungsabschnitt zu aktivieren und zu deaktivieren und auf diese Weise dem Fahrer auf Wunsch eine Funktionsunterstützung zu bieten, aber ansonsten unauffällig zu bleiben.

Die EP 3 040 809 A1 offenbart ein System zum Kontrollieren eines Mensch-Maschine-Interface in einem Kraftfahrzeug mit zumindest zwei Bildschirmen. Dabei wird eine Blickrichtung eines Fahrers des Kraftfahrzeugs ermittelt. Basierend darauf wird ermittelt, welcher der zumindest zwei Bildschirme der Blickrichtung des Fahrers am nächsten liegt. In Abhängigkeit von der Blickrichtung kann eine Funktion des Bildschirms, welcher der Blickrichtung am nächsten liegt, automatisch angepasst werden.

Die DE 11 2014 004 889 T5 betrifft ein System, welches einen Blick-Tracker beinhaltet, welcher ausgebildet ist, Blickdaten bereitzustellen, welche einer Blickrichtung eines Anwenders entsprechen. Mindestens ein Prozessor ist ausgebildet, um die Blickdaten zu analysieren, um zu bestimmen, ob sich eine Anzeige in einem zentralen Gesichtsfeld des Anwenders befindet, oder ob sich die Anzeige in einem peripheren Gesichtsfeld des Anwenders befindet. Die Prozessoren sind ferner ausgebildet, unterschiedliche Arten von Bilddaten für die Anzeige bereitzustellen, abhängig davon, ob sich die Anzeige in dem zentralen Gesichtsfeld oder dem peripheren Gesichtsfeld befindet.

Die DE102012019508 A1 betrifft ein Fahrzeug mit wenigstens einem einen Sektor der Umgebung des Fahrzeugs erfassenden Umgebungssensor und einem Display zum Anzeigen einer von Daten des Umgebungssensors abgeleiteten Darstellung des Sektors. Das Display umfasst einen an einer Außenscheibe der Fahrgastzelle des Fahrzeugs angeordneten Anzeigeschirm, der wenigstens zeitweilig transparent ist, um eine Beobachtung der Umgebung des Fahrzeugs durch den Anzeigeschirm hindurch zu ermöglichen. Eine Steuereinheit des Displays ist mit Mitteln zum Überwachen der Blickrichtung eines Fahrers des Fahrzeugs verbunden und eingerichtet, anhand der Blickrichtung zu beurteilen, ob der Fahrer das Display beachtet oder nicht, die Auffälligkeit der Darstellung erhöht wird, wenn festgestellt wird, dass der Fahrer das Display beachtet, und die Auffälligkeit der Darstellung verringert wird, wenn festgestellt wird, dass der Fahrer das Display nicht beachtet.

Aus dem Stand der Technik außerdem bekannt sind Rückspiegel zum Beobachten eines rückwärtigen Verkehrsgeschehen in einem Kraftfahrzeug. Rückspiegel können als Innenspiegel oder Seitenspiegel beziehungsweise Außenspiegel bezeichnet werden. Dabei ist der Innenspiegel in einem Innenraum des Kraftfahrzeugs angeordnet. Außenspiegel beziehungsweise Seitenspiegel können zu einer oder zu beiden Seiten des Kraftfahrzeugs, vorzugsweise im Bereich einer A-Säule des Kraftfahrzeugs, außenseitig an dem Kraftfahrzeug angeordnet sein.

Zusätzlich ist bekannt, Außenspiegel des Kraftfahrzeugs durch eine Kombination aus einer Kamera und einem Bildschirm zu ersetzen. In diesem Fall kann der rückwärtige Bereich des Kraftfahrzeugs mittels der Kamera erfasst und mittels des Bildschirms für den Fahrer des Kraftfahrzeugs dargestellt werden. Aufgrund kleinerer Abmessungen der Kamera verglichen mit einem Spiegel kann dadurch ein Luftwiderstand des Kraftfahrzeugs gesenkt werden. Daraus ergeben sich ein geringerer Energieverbrauch sowie eine höhere Reichweite. Dies ist insbesondere unter dem Aspekt fortschreitender Elektromobilität von Nutzen, wo der Energieverbrauch während der Fahrt besonders unmittelbar mit einer möglichen Reichweite und/oder einer vorzuhaltenden Batteriekapazität korreliert ist.

Es ist Aufgabe der vorliegenden Erfindung, einen Energieverbrauch bei einer Fahrt eines Kraftfahrzeugs weiter zu senken.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung geht aus von einem Verfahren zum Betreiben eines Bildschirms eines Kraftfahrzeugs. Zur Lösung der erfindungsgemäßen Aufgabe sind folgende Schritte vorgesehen:
- Erfassen eines Abbildes eines Umgebungsbereichs des Kraftfahrzeugs,
- Ermitteln einer Blickrichtung eines Nutzers des Kraftfahrzeugs,
- Schalten des Bildschirms in einen Normalbetriebsmodus oder einen Energiesparmodus in Abhängigkeit von der ermittelten Blickrichtung, wobei in dem Energiesparmodus ein Energieverbrauch des Bildschirms gegenüber dem Normalbetriebsmodus reduziert ist, und
- Anzeigen des Abbildes des Umgebungsbereichs durch den Bildschirm, zumindest, während für diesen der Normalbetriebsmodus vorgegeben wird.

Der Umgebungsbereich des Kraftfahrzeugs, von dem das Abbild erfasst wird, befindet sich insbesondere zumindest teilweise hinter dem Kraftfahrzeug. Insbesondere wird das Abbild von einem rückwärtigen Umgebungsbereich des Kraftfahrzeugs erfasst. Das Abbild des Umgebungsbereichs kann anschließend auf dem Bildschirm angezeigt werden. In einigen Ausführungsformen wird das Abbild sowohl im Energiesparmodus als auch im Normalbetriebsmodus auf dem Bildschirm angezeigt. In anderen Ausführungsformen wird das Abbild durch den Bildschirm nur in dessen Normalbetriebsmodus angezeigt. Bei dem Abbild kann es sich um ein Bildsignal oder ein Videosignal handeln.

Zum Ermitteln der Blickrichtung kann der Nutzer mittels einer Kamera erfasst werden. Die Blickrichtung wird dann durch Auswerten eines Ausgangsignals der Kamera ermittelt werden. Insbesondere ist vorgesehen, dass anhand der Blickrichtung des Nutzers der Bildschirm in den Normalbetriebsmodus geschaltet wird, wenn der Nutzer in Richtung des Bildschirms blickt und/oder den Bildschirm ansieht. Beispielsweise wird der Bildschirm in den Energiesparmodus geschaltet, wenn der Nutzer nicht in Richtung des Bildschirms blickt und/oder den Bildschirm nicht betrachtet. Bevorzugter Weise wird der Bildschirm erst dann von dem Normalbetriebsmodus in den Energiesparmodus geschaltet, wenn der Nutzer eine vorbestimmte Zeitspanne nicht in Richtung des Bildschirms geblickt hat. Beispielsweise befindet sich der Bildschirm zunächst in dem Normalbetriebsmodus, da der Nutzer in dessen Richtung blickt. Es wird ein Zeitmesser (Timer) gestartet, wenn der Nutzer seinen Blick von dem Bildschirm abwendet. Sobald der Timer einen vorbestimmten Zeitschwellwert erreicht hat, wird der Bildschirm in den Energiesparmodus geschaltet und der Nutzer nicht zwischenzeitlich wieder in Richtung des Bildschirms geblickt hat. Blickt der Nutzer in Richtung des Bildschirms, wird der Timer vorteilhafterweise zurückgesetzt.

Beispielsweise wird der Bildschirm in dem Energiesparmodus ausgeschaltet oder in seiner Helligkeit herabgeregelt. Wird der Bildschirm in seiner Helligkeit herabgeregelt, so kann das Abbild des Umgebungsbereichs des Kraftfahrzeugs auch in dem Energiesparmodus auf dem Bildschirm angezeigt werden. Alternativ kann vorgesehen sein, dass in dem Energiesparmodus mit herabgeregelter Helligkeit ein Bildschirmschoner, beispielsweise ein schwarzes Bild, angezeigt wird.

Eine Weiterbildung sieht vor, dass beim Ermitteln der Blickrichtung diese vorausschauend prognostiziert wird und der Bildschirm abhängig von einer prognostizierten Blickrichtung in den Normalbetriebsmodus oder in den Energiesparmodus geschaltet wird. Mit anderen Worten wird der Bildschirm zusätzlich oder ausschließlich abhängig von der prognostizierten Blickrichtung in den Normalbetriebsmodus oder in den Energiesparmodus geschaltet. Dadurch ist sichergestellt, dass sich der Bildschirm bereits frühzeitig wieder im Normalbetriebsmodus befindet, wenn der Fahrer oder der Nutzer in dessen Richtung blickt.

Eine Weiterbildung sieht vor, dass durch das Erfassen und das Anzeigen des Abbildes eine Funktion eines Seitenspiegels und/oder Rückspiegels des Kraftfahrzeugs simuliert wird. Insbesondere wird in diesem Fall das Abbild des rückwärtigen Umgebungsbereichs des Kraftfahrzeugs erfasst. Der Bildschirm kann in diesem Fall im Innenraum des Kraftfahrzeugs im Bereich einer A-Säule des Kraftfahrzeugs angeordnet sein.

Eine Weiterbildung sieht vor, dass das Schalten des Normalbetriebsmodus oder des Energiesparmodus für den Bildschirm zusätzlich anhand eines Fahrzustands des Kraftfahrzeugs erfolgt. Beispielsweise betrifft der Fahrzustand des Kraftfahrzeugs eine Straße, welche durch das Kraftfahrzeug befahren wird, oder eine Geschwindigkeit des Kraftfahrzeugs. Beispielsweise ist vorgesehen, dass der Bildschirm immer dann in den Normalbetriebsmodus geschaltet wird, wenn die Geschwindigkeit des Kraftfahrzeugs größer ist als ein vorbestimmter Geschwindigkeitsgrenzwert. In einem anderen Beispiel ist vorgesehen, dass der Bildschirm immer dann in den Normalbetriebsmodus geschaltet wird, wenn das Kraftfahrzeug auf einer Autobahn und/oder einer zumindest vierspurig ausgebauten Straße fährt. In diesem Fall kann die Energieeinsparung im Betrieb des Bildschirms und ein hohes Sicherheitsniveau kombiniert werden.

Eine Weiterbildung sieht vor, dass
- anhand des Abbilds ein Verkehrsteilnehmer abhängig von dessen Objekttyp, Relativposition und/oder Relativgeschwindigkeit im Verhältnis zum Kraftfahrzeug als kritisches Objekt erkannt wird, und
- für den Bildschirm stets der Normalbetriebsmodus vorgegeben wird, während das kritische Objekt erkannt wird.

Insbesondere wird der Verkehrsteilnehmer als kritisches Objekt erkannt, wenn dieser das Kraftfahrzeug überholt und/oder sich in dessen toten Winkel befindet. Dadurch, dass für den Bildschirm stets der Normalbetriebsmodus vorgegeben wird, während das kritische Objekt erkannt wird, ist gewährleistet, dass der Nutzer beziehungsweise der Fahrer den Verkehrsteilnehmer in dem Abbild des Umgebungsbereichs jederzeit erkennen kann. Der Verkehrsteilnehmer kann beispielsweise ein anderes Kraftfahrzeug, ein Fußgänger oder ein Radfahrer sein.

Eine Weiterbildung sieht vor, dass in dem Normalbetriebsmodus das kritische Objekt auf dem Bildschirm hervorgehoben wird. Mit anderen Worten wird das kritische Objekt in dem Abbild beim Anzeigen auf dem Bildschirm hervorgehoben und/oder kenntlich gemacht. Beispielsweise wird das kritische Objekt durch eine Markierung, eine Umrahmung und/oder eine Einfärbung kenntlich gemacht. Das Kenntlichmachen des kritischen Objekts auf dem Bildschirm kann beispielsweise nach Art einer erweiterten Realität ("Augmented Reality") realisiert werden. Auf diese Weise kann die Sichtbarkeit des kritischen Objekts auf dem Bildschirm für den Nutzer in Verbindung mit der Stromersparnis besonders gut kombiniert werden. Das Hervorheben des kritischen Objekts kann weitergebildet werden, indem anhand des Abbilds für das kritische Objekt zusätzlich ein Kritikalitätsniveau erfasst wird und das Kritikalitätsniveau anhand der Vorhebung des kritischen Objekts kenntlich gemacht wird. Beispielsweise gibt das Kritikalitätsniveau an, wie nahe sich der Verkehrsteilnehmer, der als das kritische Objekt erkannt wird, relativ zu dem Kraftfahrzeug befindet. Alternativ oder zusätzlich kann das Kritikalitätsniveau angeben, wie wahrscheinlich ein Zusammenstoß des Kraftfahrzeugs mit dem als das kritische Objekt erkannten Verkehrsteilnehmer bei einem vorbestimmten Fahrmanöver des Kraftfahrzeugs wäre. Das vorbestimmte Fahrmanöver kann beispielsweise ein Spurwechsel auf einer mehrspurigen Straße sein.

Ein weiterer Aspekt der Erfindung betrifft ein Kraftfahrzeug mit
- einer Bilderfassungseinheit, insbesondere einer Kamera, zum Erfassen eines Abbildes eines Umgebungsbereichs des Kraftfahrzeugs,
- einer Ermittlungseinheit zum Ermitteln einer Blickrichtung eines Nutzers des Kraftfahrzeugs,
- einem Bildschirm zum Anzeigen des Abbildes des Umgebungsbereichs durch den Bildschirm, zumindest während für diesen ein Normalbetriebsmodus vorgegeben ist, und
- einer Steuereinheit zum Schalten des Bildschirms in den Normalbetriebsmodus oder einen Energiesparmodus in Abhängigkeit von der ermittelten Blickrichtung, wobei in dem Energiesparmodus ein Energieverbrauch des Bildschirms gegenüber dem Normalbetriebsmodus reduziert ist.

Insbesondere ist das Kraftfahrzeug eingerichtet, ein Verfahren der oben genannten Art durchzuführen. Bei dem Kraftfahrzeug handelt es sich insbesondere um einen Kraftwagen, vorzugsweise einen Personenkraftwagen. Die Ermittlungseinheit kann eine Kamera umfassen. Die Kamera der Ermittlungseinheit ist insbesondere auf einen Fahrersitz des Kraftfahrzeugs ausgerichtet.

Eine Weiterbildung sieht vor, dass das Kraftfahrzeug die Bilderfassungseinheit, die Ermittlungseinheit, den Bildschirm und die Steuereinheit anstatt eines Seitenspiegels und/oder Rückspiegels aufweist. Insbesondere wird durch die genannten Bauteile die Funktion des Außenspiegels und/oder Rückspiegels ersetzt oder simuliert. Durch Verzicht auf den Außenspiegel kann der Energieverbrauch während der Fahrt des Kraftfahrzeugs besonders gut gesenkt werden.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: in einer schematischen Draufsicht ein Kraftfahrzeug; und
- Fig. 2: ein Blockdiagramm eines Systems zum Substituieren eines Rückspiegels.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

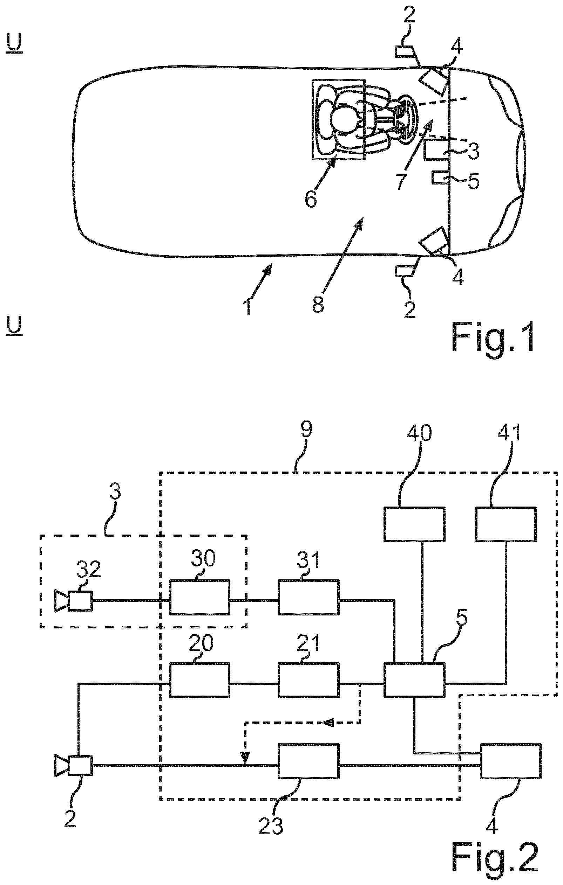

Fig. 1 zeigt ein Kraftfahrzeug 1 mit einer Bilderfassungseinheit 2, einem Bildschirm 4, einer Ermittlungseinheit 3 und einer Steuereinheit 5, wobei die genannten Teile zusammen ein System 8 zum Substituieren eines Außenspiegels ausbilden. Vorliegend umfasst das Kraftfahrzeug 1 zwei Bilderfassungseinheiten und zwei Bildschirme 4, welche jeweils einen Außenspiegel ersetzen. Eine Bilderfassungseinheit 2 und ein Bildschirm 4 auf einer linken Seite des Kraftfahrzeugs 1 beziehungsweise auf einer Fahrerseite des Kraftfahrzeugs 1 ersetzen einen linken Außenspiegel des Kraftfahrzeugs 1. Ein Bildschirm 4 sowie eine Bilderfassungseinheit 2 auf einer rechten Seite des Kraftfahrzeugs 1 beziehungsweise auf einer Beifahrerseite des Kraftfahrzeugs 1 ersetzen einen rechten Außenspiegel des Kraftfahrzeugs 1. Bilderfassungseinheit 2 und Bildschirm 4 einer Seite des Kraftfahrzeugs 1 bilden dementsprechend ein Paar. Im Folgenden ist von der Bilderfassungseinheit 2 und dem Bildschirm 4 in der Einzahl die Rede, wobei dann beide Paare an Bilderfassungseinheiten 2 und Bildschirmen 4 gemeint sind.

Die Bilderfassungseinheit 2 ist vorzugsweise als Kamera ausgeführt. Durch die Bilderfassungseinheit 2 wird ein Abbild eines Umgebungsbereichs U des Kraftfahrzeugs 1 erfasst. Insbesondere ist die Bilderfassungseinheit 2 derart ausgerichtet, dass das Abbild von einem rückwärtigen Umgebungsbereich U des Kraftfahrzeugs 1 erfasst wird. Insbesondere wird das Abbild von einem solchen rückwärtigen Umgebungsbereich U des Kraftfahrzeugs 1 erfasst, der sonst in einem Rückspiegel des Kraftfahrzeugs 1 dargestellt werden würde. Es kann auf diese Weise ein als Innenspiegel, als Außenspiegel oder als Seitenspiegel ausgebildeter Rückspiegel substituiert sein.

Auf dem Bildschirm 4 wird das Abbild des Umgebungsbereichs U für einen Nutzer 6 des Kraftfahrzeugs 1 angezeigt. Insbesondere handelt es sich bei dem Nutzer 6 um einen Fahrer des Kraftfahrzeugs 1. Insbesondere ist der Bildschirm 4 derart im Kraftfahrzeug angeordnet, dass dieser von einem Sitzplatz des Nutzers 6 aus in ähnlichem Blickwinkel einsehbar ist wie der durch den Bildschirm 4 ersetzte Außenspiegel. Vorzugsweise ist der Bildschirm 4 im Bereich einer A-Säule des Kraftfahrzeugs 1 angeordnet.

Durch die Ermittlungseinheit 3 wird eine Blickrichtung 7 des Nutzers 6 ermittelt. Die Blickrichtung 7 kann angeben, in welche Richtung der Nutzer 6 momentan blickt. Dabei beschreibt die Blickrichtung 7 insbesondere, in welche Richtung der Nutzer 6 bewusst blickt. Dabei kann ermittelt werden, in welche Richtung die Pupillen des Nutzers 6 ausgerichtet sind. Beispielsweise wird dabei ermittelt, worauf der Nutzer 6 seinen Blick fokussiert.

Eine Steuereinheit 5 ist dazu ausgebildet, den Bildschirm 4 abhängig von der Blickrichtung 7 des Nutzers 6 in einen Normalbetriebsmodus oder einen Energiesparmodus zu schalten. Dabei wird der Bildschirm 4 zumindest dann in den Normalbetriebsmodus geschaltet, wenn der Nutzer 6 in Richtung des Bildschirms 4 blickt. Der Bildschirm 4 kann dann in den Energiesparmodus geschaltet werden, wenn der Nutzer 6 nicht in Richtung des Bildschirms 4 blickt. Gemäß einer Weiterbildung wird die Blickrichtung 7 des Nutzers 6 vorausschauend prognostiziert. In diesem Fall kann der Bildschirm 4 alternativ oder zusätzlich in Abhängigkeit von einer prognostizierten Blickrichtung in den Normalbetriebsmodus oder den Energiesparmodus geschaltet werden. Beispielsweise wird anhand der momentanen Blickrichtung 7 prognostiziert, in welche Richtung der Nutzer 6 als nächstes blicken könnte. Wird anhand der Blickrichtung 7 prognostiziert, dass der Nutzer 6 demnächst auf den Bildschirm 4 blicken könnte, so kann dieser in den Normalbetriebsmodus geschaltet werden.

In dem Normalbetriebsmodus wird durch den Bildschirm 4 das Abbild des Umgebungsbereichs aus der Bilderfassungseinheit 2 angezeigt. Insbesondere ist in dem Normalbetriebsmodus eine Helligkeit des Bildschirms 4 derart gewählt, dass eine möglichst gute Ablesbarkeit beziehungsweise Sichtbarkeit eines angezeigten Bildschirminhalts auf dem Bildschirm 4 gewährleistet ist. Demgegenüber ist in dem Energiesparmodus ein Energieverbrauch des Bildschirms 4 gegenüber dem Normalbetriebsmodus reduziert. Beispielsweise wird im Energiesparmodus eine Helligkeit des Bildschirms 4 herabgeregelt oder dieser ausgeschaltet. Wird in dem Energiesparmodus die Helligkeit herabgeregelt, so kann vorgesehen sein, dass das Abbild des Umgebungsbereichs U auch im Energiesparmodus angezeigt wird. Beim Ausschalten des Bildschirms 4 kann vorgesehen sein, dass ausschließlich die Hintergrundbeleuchtung des Bildschirms 4 ausgeschaltet wird oder dass der gesamte Bildschirm 4 ausgeschaltet wird.

Fig. 2 zeigt nun ein Blockdiagramm des Systems 8. Das Abbild des Umgebungsbereichs kann aus der Bilderfassungseinheit 2 für eine Objekterkennung 20 bereitgestellt werden. Dabei wird für die Objekterkennung 20 das Abbild beziehungsweise ein Videosignal aus der Bilderfassungseinheit 2 als Eingangssignal genutzt. Im Rahmen der Objekterkennung 20 wird das Abbild beziehungsweise das Videosignal auf Objekte untersucht. Beispielsweise werden andere Verkehrsteilnehmer oder statische Objekte (beispielsweise Bäume, Leitpfosten, Ampeln, Verkehrszeichen oder Brückenpfeiler) als Objekte erfasst. Für die Objekte können Objektdaten ermittelt werden. Die Objektdaten können beispielsweise einen Objekttyp (beispielsweise anderes Kraftfahrzeug, Radfahrer oder Fußgänger), einen Bewegungsstatus (bewegtes oder unbewegtes Objekt), eine Objektgeschwindigkeit, eine Bewegungsrichtung und/oder eine Relativposition des Objekts umfassen. Die Geschwindigkeit sowie die Relativposition des Objekts ist insbesondere auf das Kraftfahrzeug 1 bezogen.

In einer Entscheidungseinheit 21 kann entschieden werden, ob es sich bei einem Objekt, welches durch die Objekterkennung 20 erkannt wurde, um ein kritisches Objekt handelt. Zusätzlich zu den Objektdaten aus der Objekterkennung 20 können hierfür weitere Fahrzeugdaten und/oder Sensordaten herangezogen werden. Beispiele hierfür sind momentane Geoposition, Kartendaten (zum Beispiel Art der befahrenen Straße, Spurwechsel), Fahrzeuggeschwindigkeit, Verkehrssituation (beispielsweise Stau, Überholmanöver, Abbiegevorgang), Wetterinformationen, Status einer automatisierten Fahrt des Kraftfahrzeugs 1, Umgebungslichtinformationen oder Datum und Uhrzeit. Die Entscheidungseinheit 21 entscheidet, ob ein erkanntes Objekt ein Kritikalitätsniveau aufweist, welches die Aufmerksamkeit des Nutzers 6 erfordert. Vorzugsweise basiert die Entscheidungseinheit 21 auf einem künstlichen neuronalen Netz. In diesem Fall kann das Erkennen der Kritikalität eines Objekts beziehungsweise das Ermitteln des Kritikalitätsniveaus auf Basis von maschinellem Lernen ("Deep Learning") durchgeführt werden.

Die Information, ob ein kritisches Objekt in dem Abbild der Umgebung U erkannt wurde, wird der Steuereinheit 5 übermittelt. Die Steuereinheit 5 kann den Bildschirm 4 zumindest dann in den Normalbetriebsmodus schalten, während ein kritisches Objekt in dem Abbild des Umgebungsbereichs U erkannt wird. Auf diese Weise ist sichergestellt, dass der Nutzer 6 kritische Objekte möglichst schnell erkennen kann.

Das Abbild des Umgebungsbereichs U beziehungsweise das Videosignal aus der Bilderfassungseinheit 2 wird durch einen Videoprozessor 23 zur Darstellung auf dem Bildschirm 4 aufbereitet. Dabei werden beispielsweise bestimmte Bereiche des Abbildes zur Darstellung auf dem Bildschirm 4 ausgeschnitten, wenn nicht das gesamte Abbild für den Nutzer 6 von Interesse ist. Durch den Videoprozessor 23 können kritische Objekte in dem Abbild hervorgehoben werden. Beispielsweise wird dem Abbild durch den Videoprozessor 23 eine Markierung oder eine Einfärbung kritischer Objekte hinzugefügt. Dies erfolgt insbesondere auf Basis virtueller Realität beziehungsweise Augmented Reality. Beispielsweise kann das kritische Objekt abhängig von seinem Kritikalitätsniveau auf unterschiedliche Weise hervorgehoben werden. Beispielsweise können kritische Objekte höchsten Kritikalitätsniveaus rot dargestellt werden und Objekte geringeren Kritikalitätsniveaus grün.

Die Ermittlungseinheit 3 kann eine Kamera 32 umfassen, welche in einem Innenraum des Kraftfahrzeugs 1 derart angeordnet ist, dass ein Fahrersitz des Kraftfahrzeugs 1 in deren Erfassungsbereich liegt. Insbesondere ist die Kamera 32 auf Kopfhöhe des auf dem Fahrersitz sitzenden Nutzers 6 ausgerichtet. Ein Videosignal aus der Kamera 32 kann einer Erkennungseinheit 30 zugeführt werden. Die Erkennungseinheit 30 und die Kamera 32 bilden zusammen die Ermittlungseinheit 3. Die Erkennungseinheit 30 ermittelt, in welche Richtung der Nutzer 6 blickt. Beispielsweise kann hierzu eine Pose von Kopf und/oder Augen des Nutzers 6 ermittelt werden. Die Pose von Kopf und/oder Augen wird insbesondere aus einem Videosignal, welches den Nutzer 6 zeigt, aus der Ermittlungseinheit 3 erfasst. Insbesondere wird daraus die Blickrichtung 7 des Nutzers 6 ermittelt. Durch eine zweite Erkennungseinheit 31 kann aus der Blickrichtung 7 des Nutzers ermittelt werden, ob der Nutzer 6 ein Bauteil im Innenraum des Kraftfahrzeugs 1 anblickt. Dies wird beispielsweise anhand einer Position des Kopfes des Nutzers 6 im Innenraum des Kraftfahrzeugs 1 sowie anhand der Blickrichtung 7 ermittelt. Dabei wird insbesondere ermittelt, ob der Nutzer 6 den Bildschirm 4 anblickt. Die Information, ob der Nutzer 6 den Bildschirm 4 anblickt, wird der Steuereinheit 5 bereitgestellt.

Zusätzlich können der Steuereinheit 5 Statusinformationen über einen Fahrerzustand des Kraftfahrzeugs 1 bereitgestellt werden. Beispielsweise werden die Fahrzeugdaten über den Fahrzustand durch eine Sensoreinrichtung 41 bereitgestellt. Zusätzlich können der Steuereinheit 5 Präferenzen des Nutzers 6 aus einer Eingabeeinrichtung 40 bereitgestellt werden. Anhand der Präferenzen kann der Nutzer 6 beispielsweise angeben, ob er grundsätzlich wünscht, dass der Bildschirm 4 in den Energiesparmodus geschaltet wird.

Die Steuereinheit 5 kann auf Basis der ihr bereitgestellten Informationen den Bildschirm 4 in den Normalbetriebsmodus oder den Energiesparmodus schalten. Insbesondere wird der Bildschirm 4 abhängig von dem Vorhandensein eines kritischen Objekts, der Blickrichtung 7, dem Fahrzustand des Kraftfahrzeugs 1 und/oder der Präferenzangaben aus der Eingabevorrichtung 40 in den Energiesparmodus oder den Normalbetriebsmodus geschaltet. Beispielsweise wird der Bildschirm 4 nur dann in den Normalbetriebsmodus geschaltet, wenn dies durch die Nutzerpräferenz erlaubt ist. Vorzugsweise wird der Bildschirm 4 höchstens dann in den Energiesparmodus geschaltet, wenn kein kritisches Objekt in dem Abbild des Umgebungsbereichs U erkannt wurde. Vorzugsweise wird der Bildschirm 4 höchstens dann in den Energiesparmodus geschaltet, wenn der Nutzer 6 diesen nicht anblickt. Anhand des Fahrzustands kann beispielsweise vorgesehen sein, dass der Bildschirm 4 immer in den Normalbetriebsmodus geschaltet wird, wenn sich das Kraftfahrzeug 1 auf einer mehrspurigen Straße befindet oder eine Geschwindigkeit des Kraftfahrzeugs 1 einen vorbestimmten Geschwindigkeitsgrenzwert überschreitet.

Durch die Ausführungsbeispiele ist gezeigt, wie durch die vorliegende Ansteuerung des Bildschirms 4, also das Schalten entweder in den Energiesparmodus oder den Normalbetriebsmodus, einerseits ein Energieverbrauch des Kraftfahrzeugs 1 reduziert werden kann, dabei andererseits jedoch auch eine hohe Verkehrssicherheit des Kraftfahrzeugs 1 gewährleistet wird.

## Patentansprüche

1. Verfahren zum Betreiben eines Bildschirms (4) eines Kraftfahrzeug (1), mit den Schritten:
- Erfassen eines Abbildes eines Umgebungsbereichs (U) des Kraftfahrzeugs (1),
- Ermitteln einer Blickrichtung (7) eines Nutzers (6) des Kraftfahrzeugs (1),
- Schalten des Bildschirms (4) in einen Normalbetriebsmodus oder einen Energiesparmodus in Abhängigkeit von der ermittelten Blickrichtung (7), wobei in dem Energiesparmodus ein Energieverbrauch des Bildschirms (4) gegenüber dem Normalbetriebsmodus reduziert ist, und
- Anzeigen des Abbildes des Umgebungsbereichs (U) durch den Bildschirm (4), zumindest während für diesen der Normalbetriebsmodus vorgegeben wird,
**dadurch gekennzeichnet, dass**
beim Ermitteln der Blickrichtung (7) diese vorausschauend prognostiziert wird und der Bildschirm (4) abhängig von einer prognostizierten Blickrichtung in den Normalbetriebsmodus oder den Energiesparmodus geschaltet wird.

2. Verfahren nach Anspruch 1,
**dadurch gekennzeichnet, dass**
der Bildschirm (4) in dem Energiesparmodus ausgeschaltet oder in seiner Helligkeit herabgeregelt wird.

3. Verfahren nach einem der vorhergehenden Ansprüche,
**dadurch gekennzeichnet, dass**
- das Schalten des Normalbetriebsmodus für den Bildschirm (4) zusätzlich anhand eines Fahrzustands des Kraftfahrzeugs (1) erfolgt, wobei der Bildschirm (4) immer dann in den Normalbetriebsmodus geschaltet wird, wenn die Geschwindigkeit des Kraftfahrzeugs (1) größer ist als ein vorbestimmter Geschwindigkeitsgrenzwert oder wenn das Kraftfahrzeug auf einer Autobahn oder einer zumindest vierspurig ausgebauten Straße fährt.

4. Verfahren nach einem der vorhergehenden Ansprüche,
**dadurch gekennzeichnet, dass**
durch das Erfassen und das Anzeigen des Abbildes eine Funktion eines Außenspiegels und/oder Rückspiegels des Kraftfahrzeugs (1) simuliert wird.

5. Verfahren nach einem der vorhergehenden Ansprüche,
**dadurch gekennzeichnet, dass**
- anhand des Abbilds ein Verkehrsteilnehmer abhängig von dessen Objekttyp, Relativposition und/oder Relativgeschwindigkeit im Verhältnis zum Kraftfahrzeug (1) als kritisches Objekt erkannt wird, und
- für den Bildschirm (4) stets der Normalbetriebsmodus vorgegeben wird, während das kritische Objekt erkannt wird.

6. Verfahren nach Anspruch 5,
**dadurch gekennzeichnet, dass**
in dem Normalbetriebsmodus das kritische Objekt auf dem Bildschirm (4) hervorgehoben wird.

7. Verfahren nach Anspruch 6,
**dadurch gekennzeichnet, dass**
anhand des Abbilds für das kritische Objekt zusätzlich ein Kritikalitätsniveau erfasst wird und das Kritikalitätsniveau anhand der Hervorhebung des kritischen Objekts kenntlich gemacht wird.

8. Kraftfahrzeug (1), mit
- einer Bilderfassungseinheit (2) zum Erfassen eines Abbildes eines Umgebungsbereichs (U) des Kraftfahrzeugs (1),
- einer Ermittlungseinheit (3) zum Ermitteln einer Blickrichtung (7) eines Nutzers (6) des Kraftfahrzeugs (1),
- einem Bildschirm (4) zum Anzeigen des Abbildes des Umgebungsbereichs (U) durch den Bildschirm (4), zumindest während für diesen ein Normalbetriebsmodus vorgegeben ist, und
- einer Steuereinheit (5) zum Schalten des Bildschirms (4) in den Normalbetriebsmodus oder einen Energiesparmodus in Abhängigkeit von der ermittelten Blickrichtung (7), wobei in dem Energiesparmodus ein Energieverbrauch des Bildschirms (4) gegenüber dem Normalbetriebsmodus reduziert ist,
**dadurch gekennzeichnet, dass**
- die Steuereinheit (5) dazu ausgebildet ist, beim Ermitteln der Blickrichtung (7) diese vorausschauend zu prognostizieren und den Bildschirm (4) abhängig von einer prognostizierten Blickrichtung in den Normalbetriebsmodus oder den Energiesparmodus zu schalten.

9. Kraftfahrzeug (1) nach Anspruch 8,
**dadurch gekennzeichnet, dass**
das Kraftfahrzeug (1), die Bilderfassungseinheit (2), die Ermittlungseinheit (3), den Bildschirm (4) und die Steuereinheit (5) anstatt eines Außenspiegels und/oder Rückspiegels aufweist.

## Claims

1. Method for operating a monitor (4) of a motor vehicle (1), comprising the following steps:
- capture of an image of a surrounding area (U) of the motor vehicle (1),
- detection of a viewing direction (7) of a user (6) of the motor vehicle (1),
- switching of the monitor (4) to a normal operating mode or a power-saving mode depending on the determined viewing direction (7), wherein in the power-saving mode power consumption of the monitor (4) is reduced compared to the normal operating mode, and
- displaying the image of the surrounding area (U) by means of the monitor (4), at least while the normal operating mode is specified for it,
**characterised in that**
in the detection of the viewing direction (7), this is predicted in advance and the monitor (4) is switched to the normal operating mode or the power-saving mode depending on a predicted viewing direction.

2. Method according to claim 1,
**characterised in that**
in the power-saving mode the monitor (4) is switched off or its brightness is reduced.

3. Method according to any one of the preceding claims,
**characterised in that**
- the switching of the normal operating mode for the monitor (4) is additionally carried out on the basis of a driving condition of the motor vehicle (1), the monitor (4) being permanently switched to the normal operating mode when the speed of the motor vehicle (1) is greater than a predetermined speed value or when the motor vehicle is driving on a motorway or on a road of at least four lanes.

4. Method according to any one of the preceding claims,
**characterised in that**
a function of an exterior mirror and/or rear-view mirror of the motor vehicle (1) is simulated by the capture and displaying of the image.

5. Method according to any one of the preceding claims,
**characterised in that**
- on the basis of the image, a road user is identified, depending on their object type, relative position and/or relative speed in relation to the motor vehicle (1), as a critical object, and
- while the critical object is identified, the normal operating mode is permanently specified for the monitor (4).

6. Method according to claim 5,
**characterised in that**
in the normal operating mode, the critical object is highlighted on the monitor (4).

7. Method according to claim 6,
**characterised in that**
a criticality level for the critical object is additionally captured on the basis of the image and the criticality level is indicated on the basis of the highlighting of the critical object.

8. Motor vehicle (1), with
- an image capture unit (2) for capturing an image of a surrounding area (U) of the motor vehicle (1),
- a detection unit (3) for detecting a viewing direction (7) of a user (6) of the motor vehicle (1),
- a monitor (4) for displaying the image of the surrounding area (U) by means of the monitor (4), at least while the normal operating mode is specified for it, and
- a control unit (5) for switching the monitor (4) to the normal operating mode or a power-saving mode depending on the determined viewing direction (7), wherein in the power-saving mode power consumption of the monitor (4) is reduced compared with the normal operating mode,
**characterised in that**
- the control unit (5) is configured, in the detecting of the viewing direction (7), to predict this in advance and to switch the monitor (4) to the normal operating mode or the power-saving mode depending on a predicted viewing direction.

9. Motor vehicle (1) according to claim 8,
**characterised in that**
the motor vehicle (1), the image capture unit (2), the detection unit (3), the monitor (4) and the control unit (5) are provided in place of an exterior mirror and/or rear-view mirror.

## Revendications

1. Procédé de fonctionnement d'un écran (4) d'un véhicule automobile (1), avec les étapes suivantes :
- détection d'une représentation d'une zone environnante (U) du véhicule automobile (1),
- détermination d'une direction du regard (7) d'un utilisateur (6) du véhicule automobile (1),
- commutation de l'écran (4) dans un mode de fonctionnement normal ou un mode d'économie d'énergie en fonction de la direction du regard (7) déterminée, dans lequel, dans le mode d'économie d'énergie, une consommation d'énergie de l'écran (4) est réduite par rapport au mode de fonctionnement normal, et
- affichage de la représentation de la zone environnante (U) sur l'écran (4), au moins pendant que le mode de fonctionnement normal est défini pour celui-ci,
**caractérisé en ce que**
lors de la détermination de la direction du regard (7), celle-ci est pronostiquée de manière prévisionnelle et l'écran (4) est commuté dans le mode de fonctionnement normal ou le mode d'économie d'énergie en fonction d'une direction du regard pronostiquée.

2. Procédé selon la revendication 1,
**caractérisé en ce que**
l'écran (4) est désactivé dans le mode d'économie d'énergie ou a sa clarté réduite.

3. Procédé selon l'une quelconque des revendications précédentes,
**caractérisé en ce que**
- la commutation du mode de fonctionnement normal pour l'écran (4) s'effectue en outre à l'aide d'un état de marche du véhicule automobile (1), dans lequel l'écran (4) est commuté chaque fois dans le mode de fonctionnement normal lorsque la vitesse du véhicule automobile (1) est supérieure à une valeur limite de vitesse prédéfinie ou lorsque le véhicule automobile se déplace sur une autoroute ou au moins une route à quatre voies.

4. Procédé selon l'une quelconque des revendications précédentes,
**caractérisé en ce que**
par le biais de la détection et de l'affichage de la représentation, une fonction d'un rétroviseur extérieur et/ou d'un rétroviseur arrière du véhicule automobile (1) est simulée.

5. Procédé selon l'une quelconque des revendications précédentes,
**caractérisé en ce que**
- à l'aide de la représentation, un usager de la route est reconnu comme objet critique en fonction de son type d'objet, de sa position relative et/ou de sa vitesse relative par rapport au véhicule automobile (1), et
- pour l'écran (4), le mode de fonctionnement normal est toujours prédéfini pendant que l'objet critique est reconnu.

6. Procédé selon la revendication 5,
**caractérisé en ce que**
dans le mode de fonctionnement normal, l'objet critique est accentué sur l'écran (4).

7. Procédé selon la revendication 6,
**caractérisé en ce que**
à l'aide de la représentation, pour l'objet critique, un niveau de criticité est en outre détecté et le niveau de criticité est rendu reconnaissable à l'aide de l'accentuation de l'objet critique.

8. Véhicule automobile (1), avec
- une unité de détection d'images (2) pour détecter une représentation d'une zone environnante (U) du véhicule automobile (1),
- une unité de détermination (3) pour déterminer une direction du regard (7) d'un utilisateur (6) du véhicule automobile (1),
- un écran (4) pour afficher la représentation de la zone environnante (U) sur l'écran (4), au moins pendant qu'un mode de fonctionnement normal est prédéfini pour celui-ci, et
- une unité de commande (5) pour commuter l'écran (4) dans le mode de fonctionnement normal ou un mode d'économie d'énergie en fonction de la direction du regard (7) déterminée, dans lequel dans le mode d'économie d'énergie une consommation d'énergie de l'écran (4) est réduite par rapport au mode de fonctionnement normal,
**caractérisé en ce que**
- l'unité de commande (5) est configurée pour, lors de la détermination de la direction du regard (7), pronostiquer celle-ci de manière prévisionnelle et commuter l'écran (4) dans le mode de fonctionnement normal ou le mode d'économie d'énergie en fonction d'une direction du regard pronostiquée.

9. Véhicule automobile (1) selon la revendication 8,
**caractérisé en ce que**
le véhicule automobile (1) présente l'unité de détection d'images (2), l'unité de détermination (3), l'écran (4) et l'unité de commande (5) au lieu d'un rétroviseur extérieur et/ou d'un rétroviseur arrière.
